# EUROPEAN PATENT APPLICATION

(11) **EP 4 415 413 A1**
(43) Date of publication of application: **14.08.2024**
(21) Application number: 23215519.2
(22) Date of filing: 11.12.2023
(51) Int. Cl.: H04W 24/02, H04W 24/10, H04W 24/08, H04W 74/00, H04W 74/0833

(54) **APPARATUS, METHOD AND COMPUTER PROGRAM FOR CONTROLLING THE STORAGE AND/OR TRANSMISSION OF RA REPORTS**

(30) Priority: 13.02.2023 GB 202302012
(71) Applicant: Nokia Technologies Oy, 02610 Espoo (FI)
(72) Inventor: YU, Ling, Kauniainen (FI); BALAN, Irina-Mihaela, Munich (DE); PANTELIDOU, Anna, Antony (FR); TOMALA, Malgorzata, Wroclaw (PL); WOLFNER, György Tamás, Budapest (HU); HELMERS, Hakon, Sceaux (FR)
(74) Representative: Nokia EPO representatives

(57) **Abstract**

Examples of the present disclosure provide apparatuses, methods and computer programs for controlling the storage and/or transmission of RA reports. Certain examples provide an apparatus (10) comprising: means (11) for receiving information (201) indicative of a criterion for determining, at least in part, whether a Random Access, RA, report is to be stored and/or transmitted; means (11) for controlling a storage and/or a transmission of the RA report based, at least in part, on the indicated criterion; wherein the criterion is based, at least in part, on a RA configuration associated with the RA report, and wherein the RA configuration comprises RA configuration information for a RA procedure that has been performed and whose information has been logged in the RA report.

## Description

### TECHNOLOGICAL FIELD

Examples of the present disclosure relate to management of Random Access, RA, reports; in particular apparatuses, methods and computer programs for controlling the storage and/or transmission of RA reports.

### BACKGROUND

The conventional management of RA reports (e.g. handling the storing and/or transmission of logs of RA procedures, such as 4-step or 2-step type RA procedures, successfully performed by a User Equipment, UE) is not always optimal.

In some circumstances it can be desirable to provide an improved apparatus, method and computer program for managing RA reports. In some circumstances it can be desirable to provide an improved apparatus, method and computer program for enhancing the storage and/or transmission of RA reports so as to provide efficient use of resources, not least storage and transmission resources. In some circumstances it can be desirable to provide an improved apparatus, method and computer program for enhancing the storage and/or transmission of RA reports so as to support RA optimization.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

The scope of protection sought for various embodiments of the invention is set out by the claims.

According to various, but not necessarily all, examples of the disclosure there are provided examples as claimed in the appended claims. Any examples and features described in this specification that do not fall under the scope of the independent claims are to be interpreted as examples useful for understanding various embodiments of the invention.

According to at least some examples of the disclosure there is provided an apparatus comprising:
means for receiving information indicative of a criterion for determining, at least in part, whether a Random Access, RA, report is to be stored and/or transmitted; and
means for controlling a storage and/or a transmission of the RA report based, at least in part, on the indicated criterion,
wherein the criterion is based, at least in part, on a RA configuration associated with the RA report,
and wherein the RA configuration comprises RA configuration information for a RA procedure that has been performed and whose information has been logged in the RA report.

According to various, but not necessarily all, examples of the disclosure there is provided a method comprising:
receiving information indicative of a criterion for determining, at least in part, whether a Random Access, RA, report is to be stored and/or transmitted; and
controlling a storage and/or a transmission of the RA report based, at least in part, on the indicated criterion,
wherein the criterion is based, at least in part, on a RA configuration associated with the RA report,
and wherein the RA configuration comprises RA configuration information for a RA procedure that has been performed and whose information has been logged in the RA report.

According to various, but not necessarily all, examples of the disclosure there is provided a chipset comprising processing circuitry configured to perform the above-mentioned method.

According to various, but not necessarily all, examples of the disclosure there is provided a module, circuitry, device and/or system comprising means for performing the above-mentioned method.

According to various, but not necessarily all, examples of the disclosure there is provided a computer program comprising instructions, which when executed by an apparatus, cause the apparatus to perform:
receiving information indicative of a criterion for determining, at least in part, whether a Random Access, RA, report is to be stored and/or transmitted; and
controlling a storage and/or a transmission of the RA report based, at least in part, on the indicated criterion,
wherein the criterion is based, at least in part, on a RA configuration associated with the RA report,
and wherein the RA configuration comprises RA configuration information for a RA procedure that has been performed and whose information has been logged in the RA report.

According to various, but not necessarily all, examples of the disclosure there is provided an apparatus comprising:
at least one processor; and
at least one memory storing instructions that, when executed by the at least one processor, cause the apparatus at least to:
   receive information indicative of a criterion for determining, at least in part, whether a Random Access, RA, report is to be stored and/or transmitted; and
   control a storage and/or a transmission of the RA report based, at least in part, on the indicated criterion,
   wherein the criterion is based, at least in part, on a RA configuration associated with the RA report,
   and wherein the RA configuration comprises RA configuration information for a RA procedure that has been performed and whose information has been logged in the RA report.

According to various, but not necessarily all, examples of the disclosure there is provided a non-transitory computer readable medium encoded with instructions that, when executed by at least one processor, causes at least the following to be performed:
receiving information indicative of a criterion for determining, at least in part, whether a Random Access, RA, report is to be stored and/or transmitted; and
controlling a storage and/or a transmission of the RA report based, at least in part, on the indicated criterion,
wherein the criterion is based, at least in part, on a RA configuration associated with the RA report,
and wherein the RA configuration comprises RA configuration information for a RA procedure that has been performed and whose information has been logged in the RA report.

According to at least some examples of the disclosure there is provided an apparatus comprising:
means for transmitting, to a User Equipment, UE, information indicative of a criterion for the UE to determine, at least in part, whether a Random Access, RA, report is to be stored and/or transmitted by the UE to the apparatus,
wherein the criterion is based, at least in part, on a RA configuration associated with the RA report,
and wherein the RA configuration comprises RA configuration information for a RA procedure that has been performed and whose information has been logged by the UE in the RA report.

According to various, but not necessarily all, examples of the disclosure there is provided a method comprising:
transmitting, to a User Equipment, UE, information indicative of a criterion for the UE to determine, at least in part, whether a Random Access, RA, report is to be stored and/or transmitted by the UE to the apparatus,
wherein the criterion is based, at least in part, on a RA configuration associated with the RA report,
and wherein the RA configuration comprises RA configuration information for a RA procedure that has been performed and whose information has been logged by the UE in the RA report.

According to various, but not necessarily all, examples of the disclosure there is provided a chipset comprising processing circuitry configured to perform the above-mentioned method.

According to various, but not necessarily all, examples of the disclosure there is provided a module, circuitry, device and/or system comprising means for performing the above-mentioned method.

According to various, but not necessarily all, examples of the disclosure there is provided a computer program comprising instructions, which when executed by an apparatus, cause the apparatus to perform:
transmitting, to a User Equipment, UE, information indicative of a criterion for the UE to determine, at least in part, whether a Random Access, RA, report is to be stored and/or transmitted by the UE to the apparatus,
wherein the criterion is based, at least in part, on a RA configuration associated with the RA report,
and wherein the RA configuration comprises RA configuration information for a RA procedure that has been performed and whose information has been logged by the UE in the RA report.

According to various, but not necessarily all, examples of the disclosure there is provided an apparatus comprising:
at least one processor; and
at least one memory storing instructions that, when executed by the at least one processor, cause the apparatus at least to:
   transmit, to a User Equipment, UE, information indicative of a criterion for the UE to determine, at least in part, whether a Random Access, RA, report is to be stored and/or transmitted by the UE to the apparatus,
   wherein the criterion is based, at least in part, on a RA configuration associated with the RA report,
   and wherein the RA configuration comprises RA configuration information for a RA procedure that has been performed and whose information has been logged by the UE in the RA report.

According to various, but not necessarily all, examples of the disclosure there is provided a non-transitory computer readable medium encoded with instructions that, when executed by at least one processor, causes at least the following to be performed:
transmitting, to a User Equipment, UE, information indicative of a criterion for the UE to determine, at least in part, whether a Random Access, RA, report is to be stored and/or transmitted by the UE to the apparatus,
wherein the criterion is based, at least in part, on a RA configuration associated with the RA report,
and wherein the RA configuration comprises RA configuration information for a RA procedure that has been performed and whose information has been logged by the UE in the RA report.

The following portion of this 'Brief Summary' section describes various features that can be features of any of the examples described in the foregoing portion of the 'Brief Summary' mutatis mutandis. The description of a function should additionally be considered to also disclose any means suitable for performing that function, or any instructions stored in at least one memory that, when executed by at least one processor, cause an apparatus to perform that function.

In some but not necessarily all examples, controlling the storage and/or the transmission of the RA report based, at least in part, on the indicated at least one criterion comprises:
determining whether the indicated criterion is met for the RA report; and
controlling the storage and/or the transmission of the RA report based, at least in part, on the determination.

In some but not necessarily all examples, the indicated criterion comprises one of the following:
whether the RA configuration associated with the RA report corresponds to a currently active RA configuration;
whether the RA configuration associated with the RA report corresponds to a former RA configuration;
whether the RA configuration associated with the RA report corresponds to any of the N-last RA configurations; or
whether the RA configuration associated with the RA report corresponds to any RA configuration.

In some but not necessarily all examples, controlling the storage of the RA report based, at least in part, on the indicated criterion comprises one of the following:
maintaining a storage of the RA report based, at least in part, on the indicated criterion;
deleting or discarding the RA report based, at least in part, on the indicated criterion; or
preventing storage of the RA report based, at least in part, on the indicated criterion.

In some but not necessarily all examples, the apparatus further comprises:
means for receiving a request for one or more RA reports; and
means for transmitting the RA report based, at least in part, on the indicated criterion and on the received request.

In some but not necessarily all examples, the apparatus further comprises:
means for receiving second information indicative of a second criterion for determining, at least in part, whether the RA report is to be stored and/or transmitted,
wherein the second criterion is based, at least in part, on cell information associated with the RA report,
wherein the cell information comprises an indication of a cell identity or a cell group identity in which the RA procedure has been performed,
and wherein the controlling means is further configured to control the storage and/or the transmission of the RA report further based, at least in part, on the indicated second criterion.

In some but not necessarily all examples, the apparatus further comprises:
means for receiving third information indicative of a third criterion for determining, at least in part, whether the RA report is to be stored and/or transmitted,
wherein the third criterion is based, at least in part, on a content of the RA report,
and wherein the controlling means is further configured to control the storage and/or the transmission of the RA report further based, at least in part, on the indicated third criterion.

In some but not necessarily all examples, the apparatus further comprises:
means for receiving a RA configuration;
means for performing a RA procedure using the received RA configuration;
means for generating a RA report of the RA procedure;
means for storing the generated RA report; and
means for storing one or more parts of the received RA configuration used for the RA procedure of the generated RA report, and/or an indication of one or more parts of the received RA configuration used for the RA procedure of the generated RA report.

In some but not necessarily all examples, the information indicative of the criterion is received via at least one of:
broadcasted signaling;
System Information Block, SIB, signaling;
dedicated signaling;
dedicated Radio Resource Control, RRC, signaling;
a RRCSetupRequest message;
a RRCResumeRequest message;
a RRCReconfiguration message; or
a UElnformationRequest message.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

### BRIEF DESCRIPTION OF THE DRAWINGS

Some examples will now be described with reference to the accompanying drawings in which:
Fig. 1 schematically illustrates an example of a radio telecommunications network suitable for use with examples of the present disclosure;
Fig. 2 schematically illustrates a method in accordance with an example of the subject matter described herein;
Fig. 3 schematically illustrates a signaling diagram in accordance with an example of the subject matter described herein;
Fig. 4 schematically illustrates a signaling diagram in accordance with another example of the subject matter described herein;
Fig. 5 schematically illustrates a signaling diagram in accordance with yet another example of the subject matter described herein;
Fig. 6 schematically illustrates a signaling diagram in accordance with yet another example of the subject matter described herein;
Fig. 7 schematically illustrates an apparatus in accordance with the subject matter described herein; and
Fig. 8 schematically illustrates a computer program in accordance with the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

In the drawings (and description) a similar feature may be referenced by the same three-digit number. In the drawings (and description), an optional subscript to the three-digit number can be used to differentiate different instances of similar features. Therefore, a three-digit number without a subscript can be used as a generic reference and the three-digit number with a subscript can be used as a specific reference. A subscript can comprise a single digit that labels different instances. A subscript can comprise two digits including a first digit that labels a group of instances and a second digit that labels different instances in the group.

### ABREVIATIONS/DEFINITIONS

- 3GPP: 3rd Generation Partnership Project
- 5GC: 5G Core
- AMF: Access and Mobility Management Function
- CU: Central Unit
- DU: Distributed Unit
- CGI: Cell Global Identifier
- EPC: Evolved Packet Core
- E-UTRAN: Evolved Universal Terrestrial Radio Access Network
- LBT: Listen Before Talk
- MAC: Medium Access Control
- MR-DC: Multi Radio Access Technology - Dual Connection
- NW: Network
- PCI: Physical cell ID
- RA: Random Access
- RACH: Random Access Channel
- RAN: Radio Access Network
- RLC: Radio Link Layer
- RRC: Radio Resource Control
- RRH: Remote Radio Head
- SIB: System Information Block
- SIM: Subscriber Identity Module
- SSB: Synchronization Signal Block
- TRP: Transmission and Reception Point
- UE: User Equipment
- UPF: User Plane Function

### DETAILED DESCRIPTION

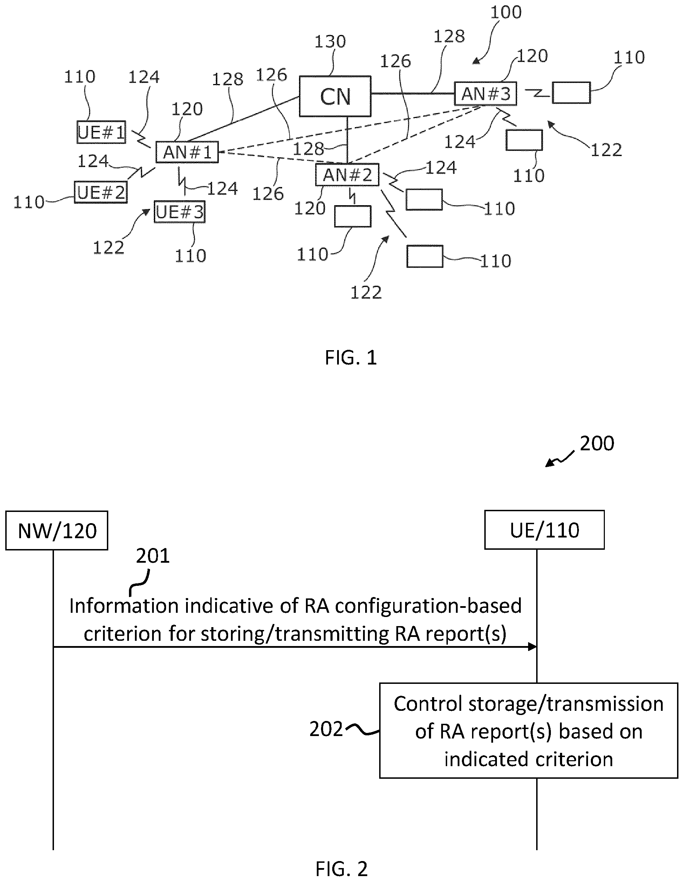

The figures, not least FIGs 2 to 6, schematically illustrate, and the following description describes, various examples of the disclosure including an apparatus (10, 120) comprising means (11, 15) for receiving information (201) indicative of a criterion for determining, at least in part, whether a Random Access, RA, report is to be stored and/or transmitted. The criterion is based, at least in part, on a RA configuration associated with the RA report. The RA configuration comprises RA configuration information for a RA procedure that has been performed and whose information has been logged in the RA report. The apparatus further comprises means (11,15) for controlling a storage and/or a transmission (202) of the RA report based, at least in part, on the indicated criterion.

FIG. 1 schematically illustrates an example of a network 100 suitable for use with examples of the present disclosure. The network comprises a plurality of network nodes including: terminal nodes 110 (also referred to as User Equipment, UE), access nodes 120 (also referred to as Transmission Reception Points, TRPs; Radio Access Network, RAN, nodes, or base stations), and one or more core network nodes 130. The terminal nodes 110 and access nodes 120 communicate with each other. The one or more core network nodes 130 may, in some but not necessarily all examples, communicate with each other. The one or more access nodes 120 may, in some but not necessarily all examples, communicate with each other.

The network 100 is in this example a radio telecommunications network, i.e. a RAN, in which at least some of the terminal nodes 110 and access nodes 120 communicate with each other using transmission/reception of radio waves.

The RAN 100 may be a cellular network comprising a plurality of cells 122 each served by an access node 120. The access nodes 120 comprise cellular radio transceivers. The terminal nodes 110 comprise cellular radio transceivers.

In the particular example illustrated, the network 100 may be a New Radio, NR, network of the Third Generation Partnership Project, 3GPP, and its fifth generation, 5G, technology. In other examples, the network 100 may be a Next Generation, NG, i.e. sixth generation, 6G, Radio Network that is currently under development (i.e. an evolution of the NR network and its 5G technology).

The interfaces between the terminal nodes 110 and the access nodes 120 are radio interfaces 124 (e.g., Uu interfaces). The interfaces between the access nodes 120 and one or more core nodes 130 are backhaul interfaces 128 (e.g., S1 and/or NG interfaces).

Depending on the exact deployment scenario, the access nodes 120 can be RAN nodes such as NG-RAN nodes. NG-RAN nodes may be gNodeBs, gNBs, that provide NG user plane and control plane protocol terminations towards the UE. The gNBs connected by means of NG interfaces to a 5G Core (5GC), more specifically to an Access and Mobility Management Function, AMF, by means of an NG Control Plane, NG-C, interface and to a User Plane Function, UPF, by means of an NG User Plane, NG-U, interface. The access nodes 120 may be interconnected with each other by means of Xn interfaces 126.

The cellular network 100 could be configured to operate in licensed frequency bands, or unlicensed frequency bands (not least such as: unlicensed bands that rely upon a transmitting device to sense the radio resources/medium before commencing transmission, such as via a Listen Before Talk, LBT, procedure; and a 60GHz unlicensed band where beamforming may be required in order to achieve required coverage).

The access nodes 120 can be deployed in an NG standalone operation/scenario. The access nodes 120 can be deployed in a NG non-standalone operation/scenario. The access nodes can be deployed in a Carrier Aggregation operation/scenario. The access nodes 120 can be deployed in a dual connectivity operation/scenario, i.e., Multi Radio Access Technology - Dual Connection, MR-DC.

In such non-standalone/dual connectivity deployments, the access nodes 120 may be interconnected to each other by means of X2 or Xn interfaces, and connected to an Evolved Packet Core, EPC, by means of an S1 interface or to the 5GC by means of a NG interface.

The terminal nodes 110 are network elements in the network that terminate the user side of the radio link. They are devices allowing access to network services. The terminal nodes 110 may be referred to as User Equipment, UE, mobile terminals or mobile stations. The term 'User Equipment' may be used to designate mobile equipment comprising a smart card for authentication/encryption etc such as a Subscriber Identity Module, SIM. In other examples, the term 'User Equipment' is used to designate a location/position tag, a hyper/smart tag or a mobile equipment comprising circuitry embedded as part of the user equipment for authentication/encryption such as software SIM.

The access nodes 120 are network elements in the network responsible for radio transmission and reception in one or more cells 122 to or from the terminal nodes 110. The access nodes 120 are the network termination of a radio link. An access node 120 can be implemented as a single network equipment, or have a split architecture that is disaggregated/distributed over two or more RAN nodes, such as a Central Unit, CU, a Distributed Unit, DU, a Remote Radio Head-end, RRH, using different functional-split architectures and different interfaces.

Where the access node 120 has a disaggregated (split) architecture, the access node 120 can comprise one or more distributed units, gNB-DU, and a centralized unit, gNB-CU (not shown in FIG. 1). The gNB-CU is a logical node configured to host a Radio Resource Connection, RRC, layer and other layers of the access node 120. The gNB-CU controls the operation of one or more gNB-DUs. The gNB-DU is a logical node configured to host Radio Link Control, RLC, protocol layer, Medium Access Control, MAC, layer and Physical, PHY, layer of the access node 120. The gNB-DU may communicate via a dedicated interface (e.g. an F1 interface) to a RRC layer hosted by the gNB-CU. One gNB-DU can support one or multiple cells 122.

In the following description, an access node 120 and/or a core node 130 will be referred to simply as network, NW; and a terminal node 110 will be referred to simply as User Equipment, UE.

A RA procedure (which may be referred to as a RACH procedure) is a procedure for enabling a UE to create an initial connection with NW. An example of a RA procedure is specified in section 5.1 of 3rd Generation Partnership Project; Technical Specification Group Radio Access Network; NR; Medium Access Control (MAC) protocol specification (Release 17), 38.321 V17.3.0. Examples of a RA procedure include a 4-step type RA procedure or a 2-step type RA procedure.

Prior to the UE initiating a RA procedure, the UE is configured with a RA configuration (which may be referred to as a RACH configuration).

A RA configuration comprises RA procedure related configuration information, i.e. sent from NWto the UE, for enabling the UE to perform a RA procedure according to the configuration. The RA configuration may comprise parameters for the UE to use in the RA procedure, i.e. parameters for the RA procedure whose parameter values can be configured via RRC for a selected set of RA resources. An example list of parameters is specified in section 5.1.1 of 3rd Generation Partnership Project; Technical Specification Group Radio Access Network; NR; Medium Access Control (MAC) protocol specification (Release 17); 38.321 V17.3.0. RA configuration may include, not least for example:
- prach-Configurationlndex: the available set of PRACH occasions for the transmission of the Random Access Preamble for Msg1. These are also applicable to the MSGA PRACH if the PRACH occasions are shared between 2-step and 4-step RA types
- msgA-PRACH-Configurationlndex: the available set of PRACH occasions for the transmission of the Random Access Preamble for MSGA in 2-step RA type;
- preambleReceivedTargetPower: initial Random Access Preamble power for 4-step RA type;
- msgA-PreambleReceivedTargetPower: initial Random Access Preamble power for 2-step RA type
- FeatureCombination: feature or a combination of features associated with a set of Random Access resources;
- feature Priorities: priorities for features, such as RedCap, NSAG(s), etc. (see clause 5.1.1d);
- ra-Preamblelndex: Random Access Preamble;
- ra-PreambleStartlndex: the starting index of Random Access Preamble(s) for on-demand SI request;

A UE, upon successfully performing a RA procedure, may create a RA report which is logged/stored at the UE. The UE may also log a RA report upon a failed performance of a RA procedure, or upon successfully completing an on-demand system information acquisition procedure in a RRC_IDLE or a RRC_INACTIVE state.

A RA report (which may be referred to as a RA procedure report, a RACH report, a RACH procedure report, or a RACH information report) comprises RA information, i.e. information of a random access procedure performed by a UE, not least such as the UE's log of the random access procedure which is logged in the report. An example of a RA report is specified in section 6.2.2 of 3rd Generation Partnership Project; Technical Specification Group Radio Access Network; NR; Radio Resource Control (RRC) protocol specification (Release 17), 38.331 V17.3.0. A single RA report or RA report instance may be created by and logged/stored at a UE for each of successful RA procedures. In current 3GPP specification, the contents of the RA report comprise, not least, the following (which is a non-exhaustive list):
- Contention detection indication per RACH attempt;
- Indexes of the Synchronization Signal Blocks, SSBs, and number of RA preambles sent on each tried SSB listed in chronological order of attempts;
- Indication whether the selected SSB is above or below the configured Reference Signal Received Power, RSRP, threshold per RACH attempt;
- 2-step RACH information.

According to current standardization in 3GPP [TS 38.331 (V.17.3.0)], a UE logs/stores a RA report upon successfully performing a RA procedure initialized with 4-step or 2-step RA type, or upon failed or successfully completed on-demand system information acquisition procedure in RRC_IDLE or RRC_INACTIVE state. When the UE goes to RRC_CONNNECTED state, NW may use a UE Information procedure to request the UE to report the logged RA reports. In the regard, the NW may send a UE Information Request message comprising a RA report request, i.e. the NW may send a "UElnformationRequest message to the UE, in which the ra-ReportReq field is set to "true". Responsive to this, the UE may send a UE Information Response message comprising one or more RA reports to the NW.

In current 3GPP specifications, the UE is constrained to a maximum of 8 RA reports stored in the UE. Moreover, the UE is also constrained as to the RA report storing time, namely storing a RA report for a maximum of 48 hours. If there were already 8 RA reports stored at the UE, the UE cannot store/log any further RA reports. If 48 hours have elapsed after the last RA report (or after a RA report for a RA procedure triggered by on-demand system information acquisition), the RA reports will be released. Accordingly, the current specification mandates the UE to store and transmit/report RA reports regardless of whether it is for a new/latest/current RA configuration or an old/previous/former RA configuration - as long as 48 hours has not elapsed. However, as will be discussed below, in certain cases, some of RA reports on old/previous/former RA configurations may not be needed by the NW.

In addition to logging a RA report upon successfully performing a RA procedure, the UE may log an RA report upon a failed RA procedure or a successfully completed on-demand system information acquisition procedure in RRC_IDLE or RRC_INACTIVE state. The UE may be also configured to store and report a failed RA procedure in e.g. a radio link failure or a handover failure related report etc.

When considering Self-Organizing Networks, SON, aspect of RA optimization by the NW, the following main use cases may be identified:
- Use case 1: statistics information collection on certain RA configuration(s)
- Use case 2: adjust a RA configuration to provide better RA procedure performance based on RA report(s) on a current/existing RA configuration.
- Use case 3: track one specific UE's RA performance for RA configuration received by the UE via a broadcasted signaling mechanism (such as a System Information Block, SIB, transmission), i.e. SIB-based RA configuration (as compared to RA configuration received by the UE via a dedicated signaling mechanism, such as dedicated Radio Resource Control, RRC, signaling).

In general, a RA procedure performance may be related to: the number of UEs camping on a cell; an initial access rate; an incoming HandOver, HO, rate; a tracking area update rate; a traffic pattern of the UE; Discontinuous Reception, DRX, configuration that may cause the UE to lose Uplink, UL, synchronization and then use a RA procedure to seek to acquire a UL timing advance; UE distribution with different feature(s) that triggers a RA procedure if a RA configuration for a different feature combination (i.e. RA partitioning ) is configured.

In use case 2 identified above, the RA report(s) associated with the latest RA configuration are only useful for the NW to identify RA performance issues and adjust a RA configuration accordingly. In this case, when the NW has changed the RA configuration, UEs may have stored/logged RA report(s) on previous/old RA configuration(s). Receiving such RA report(s) associated with such "old" RA configurations may not be useful to the NW for RA optimization. Thus, storing and reporting such "useless" RA report(s) introduces memory, processing and signaling overhead (i.e. inefficient use of storage and transmission resources) without bringing much gain from a RA performance optimization/enhancement perspective. Furthermore, in processing RA reports that are outdated on the UE side, their use on the NW side might be impractical due to a lack of possibility to associate such RA reports with corresponding associated NW configuration.

On the other hand, the NW may still need the RA reports selectively. For instance, the NW may need RA reports associated with old/former RA configuration(s) for use case 1 identified above in order to collect statistic information of certain RA configurations, or for use case 3 in order to obtain a particular UE's experience on what went wrong in RA attempts from the UE's perspective over different RA configurations.

Examples of the present disclosure relate to RA reports, sent by a UE to the NW upon request from the NW, which include information related to the outcome of a RA procedure and the corresponding RA configuration and parameters that have been used during each RA procedure. These RA reports can be used by the NW to identify any performance issue in accessing a cell and to adjust/optimize the RA configuration accordingly.

As will be discussed in further detail below, in certain examples, the NW indicates to the UE whether the RA reports associated with a previous/old RA configuration should be logged/stored by the UE and reported/transmitted to the NW. The indication can be broadcast through SIB1 or another SIB, or sent as part of a RRC Resume/Setup/Reconfiguration message, or as part of a RRC UElnformationRequest message. The NW can further indicate for which cell(s) or group(s) of cells the indication is valid. The NW can further indicate which type of information shall be reported for RA reports associated with a previous/old RA configuration. Examples of the present disclosure may thereby enable a selection/filtering of RA reports for use in RA optimization, i.e. a selection of which RA reports (and parts thereof) are to be stored and/or transmitted to the NW for the NW to use for RA Optimization.

Certain examples of the present disclosure are related to SON feature for supporting RA optimization. RA optimization is supported in 3GPP by specifying the UE to report RA procedure related information to an NG-RAN node.

Certain examples of the present disclosure seek to provide RA report enhancement, e.g. for SON/Minimization of Drive Test, MDT, not least in 3GPP Rel-18 and beyond. Certain examples of the present disclosure seek to address/solve the problem of how to facilitate and improve a NW's SON operation for RA optimization.

As will be set out in further detail below, examples of the present disclosure propose a mechanism for the NW to selectively control which RA reports should be stored and/or transmitted/reported to the NW.

Examples of the present disclosure may enable the NW to selectively control the UE to store (e.g. whether to keep or delete) and/or transmit:
- only those RA reports associated with an old/previous RA configuration,
- only those RA reports associated with the latest/current RA configuration,
- only those RA reports associated with the N-last RA configurations, or
- RA reports associated with any RA configuration.

Examples of the present disclosure may enable the NW to selectively control the UE to store and/or transmit:
- only those RA reports related to certain cell(s) or group of cell(s), and/or
- only those RA reports related to 2-steps and/or 4-steps RA procedures.

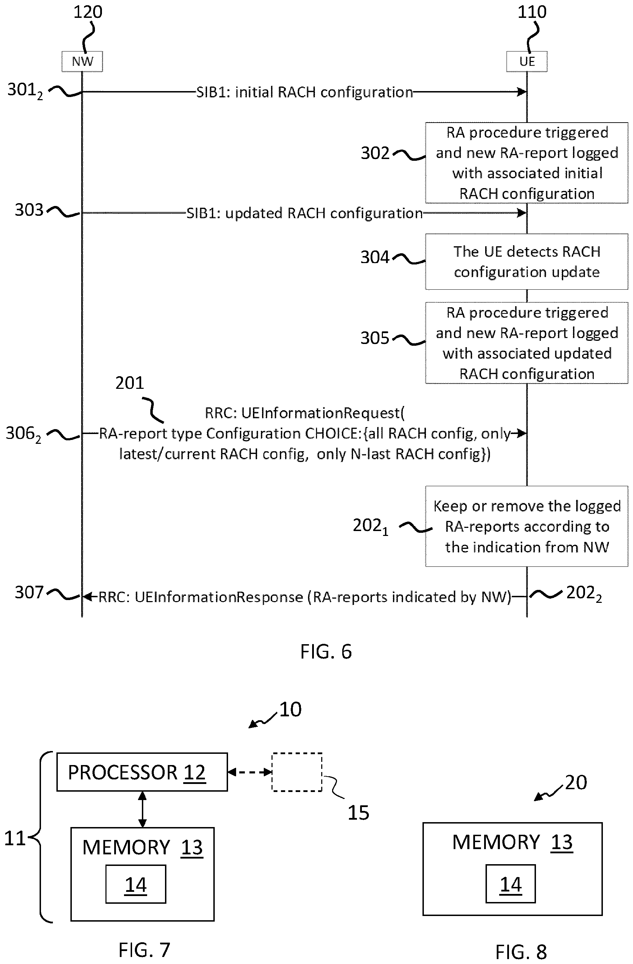

Fig. 2 schematically illustrates a method 200 in accordance with an example of the subject matter described herein. Fig. 2 illustrates one or more actions/functions performed by/at a plurality of entities (namely a first apparatus and a second apparatus [such as is described with reference Fig. 7] that, for simplicity, shall simply be referred to hereinafter as UE 110 and NW 120 respectively). Fig. 2 can therefore be considered to illustrate a method performed at/by the UE and a method performed at/by the NW. The actions/functions depicted in FIG. 2 can also be implemented by a computer program (such as is described with reference to Fig. 8). The blocks illustrated in FIG 2 may thereby represent actions in a method, functionality performed by an apparatus, and/or sections of instructions/code in a computer program.

In the illustrated method, a NW, e.g. RAN node 120, transmits to a UE 110, information 201 (e.g. a first indication) indicative of a criterion for determining whether a RA report is to be stored and/or transmitted, wherein the criterion is based, at least in part, on a RA configuration associated with the RA report. In this regard, the RA configuration comprises RA configuration information for a RA procedure that has been performed and whose information has been logged, i.e. by the UE, in the RA report.

In block 202, the UE controls a storage and/or a transmission of one or more RA reports based, at least in part, on the indicated criterion.

In this regard, the UE may control the storage and/or the transmission of each of the UE's RA reports based, at least in part, on a determination as to whether the indicated criterion is met for each RA report.

The criterion may comprise one of the following:
- whether the RA configuration associated with the RA report corresponds to a currently active (i.e. currently in use/the latest) RA configuration;
- whether the RA configuration associated with the RA report corresponds to any of the N-last RA configurations (i.e. where N is a natural number greater than or equal to 1 and may be less than or equal to 8);
- whether the RA configuration associated with the RA report corresponds to any former RA configurations (i.e. non-currently active RA configurations); or
- whether the RA configuration associated with the RA report corresponds to any RA configuration (e.g. any of: a current RA configuration and one or more former RA configurations).

In this regard, the NW can indicate to the UE one of the following:
- whether RA report(s) associated with a former/previous/old RA configuration (i.e., a RA configuration that is no longer being used for accessing a cell) should be stored and/or transmitted to the NW;
- whether RA report(s) associated with an updated/latest/current RA configuration (i.e., a RA configuration that is being currently used for accessing the cell) should be stored and/or transmitted to the NW;
- whether RA report(s) associated with the N-last RA configurations (for instance the two last RA configurations including the latest/current RA configuration and the penultimate RA configuration) should be stored and/or transmitted to the NW; or
- whether RA report(s) associated with any RA configurations should be stored and/or transmitted to the NW.

The information for indicating whether RA report(s) should be stored may comprise information for indicating to the UE whether the UE should do one of the following:
- maintain the RA report in a storage of the UE (e.g. in an instance such as mentioned in the example below wherein the RA report has previously been stored in the UE's storage) wherein the selection of which RA reports are to be maintained is based, at least in part, on the indicated RA configuration-based criterion;
- delete or disregard the RA report from the UE's storage (e.g. in an instance such as mentioned in the example below wherein the RA report has previously been stored in the UE's storage) wherein the selection of which RA reports are to be deleted or disregarded is based, at least in part, on the indicated RA configuration-based criterion; or
- prevent the storage of the RA report (e.g. in the case where the RA report is newly created following a performance of a RA procedure) wherein the selection of which RA reports are to be prevented from being stored is based, at least in part, on the indicated RA configuration-based criterion.

In some examples, in addition to storing information such as cell ID, 2-step/4-step RA attempt, etc, in each RA report, the UE also stores information of the RA configuration associated with each corresponding RA report.

In some examples, the UE may be configured to:
- receive a RA configuration from the NW,
- perform a RA procedure using the received RA configuration;
- generate a RA report of the RA procedure; and
- store the generated RA report along with:
   - one or more parts of the received RA configuration used for the RA procedure of the generated RA report; and/or
   - an indication of one or more parts of the received RA configuration used for the RA procedure of the generated RA report.

In this regard, when storing a RA report, the UE may also store the RA configuration (which may have been previously received by the UE from the NW) associated with the RA report. In some examples, rather than storing all or one or more parts of the RA configuration, the UE stores an indication of the RA configuration, or an indication one or more parts thereof associated with the RA report. The UE may subsequently determine if the RA configuration associated with the RA report meets the indicated RA configuration-based criterion, based on which the UE may determine whether to maintain, delete, or discard the stored RA report or prevent the storage of the RA report.

The information for indicating whether the RA report should be transmitted may comprise information for indicating to the UE whether or not the UE should send the RA report (i.e. a report whose associated RA configuration which meets the indicated criterion) in response to receiving a RA report request from NW (i.e. a request for triggering the transmission of one or more RA reports).

The UE's control of the transmission of RA reports based on the indicated criterion may comprise receiving a RA report request from the NW (not shown in Fig. 2) and, responsive to the same, transmitting one or more RA reports whose associated RA configuration meet the indicated RA configuration-based criteria.

In some examples, the NW may also transmit second information (e.g. a second indication) indicative of a second criterion for further determining, at least in part, whether the RA report is to be stored and/or transmitted. The second criterion may be based, at least in part, on cell information associated with the RA report, wherein the cell information comprises an indication of a cell identity (e.g. Physical Cell Identifier, PCI, or Cell Global Identifier, CGI) or a group of cells (e.g. cell group ID) in the RA procedure has been performed. The second information and second criterion (i.e. a cell-based criterion) can thereby be used to further control the storage and/or transmission of RA reports, e.g. so as to cause the UE to store and/or transmit RA reports only for certain particular cells/groups of cells. In this regard, the NW may further indicate to the UE for which cell(s) or group(s) of cells RA reports are to be stored and/or reported (and likewise for which cell(s) or group(s) of cells RA reports are not to be stored and/or reported). The NW may thereby provide both RA configuration-based criterion as well as a cell-based criterion for determining whether or not to store and/or transmit a RA report. For instance, the NW may indicate to the UE that RA reports associated with a previous/old RA configuration of a current serving cell should not be stored or reported, but that the RA reports from other cells should be reported regardless of whether they are associated with a previous/old RA configuration or not.

In some examples, the NW may also transmit third information indicative of a third criterion for further determining, at least in part, whether the RA report is to be stored and/or transmitted. The third criterion may be based, at least in part, on a content of the RA report (i.e. based on one or more parts of a RA report). In this regard, the NW may further indicate to the UE which part(s) of RA reports should be stored and/or reported for the RA reports associated with a particular (e.g. previous/old or current/new) RA configuration.

Such second and third criteria (i.e. cell-based and RA report content-based criteria) can thereby be used in conjunction with the RA configuration based criteria to further determine whether an RA report is to be stored and/or transmitted. For instance, the criteria can be used so that only RA reports associated with a certain RA configuration, for certain selected cell(s), and having certain content/parts are stored and/or transmitted. For instance, whether RA reports related to 2-steps RA and/or 4-steps RA should or should not be stored and/or reported; and/or whether RA reports associated with a RA configuration that is configured via broadcasted signaling (e.g. SIB signaling) or via dedicated signaling (e.g. RRC signaling) should or should not be stored and/or reported.

It is to be appreciated that the various criteria can be combined, i.e. the RA configuration-based criterion can be combined with the cell-based criterion and/or the RA report part-based criterion so as to enable to the NW to selectively determine which RA reports and which parts of the same the NW would wish to receive, e.g. to enable the NW to use the same for optimizing RA configurations. In some examples, where the (first) information, the second information and the third information are transmitted via respective first, second and third indications, the indications can be combined. For instance, rather than transmitting separate indications for each criterion, a single indication may be configured to indicate a combination of criteria, e.g. a single indication may be provided indicative of the RA configuration-based criterion in combination with the cell-based criterion and/or the RA report part-based criterion.

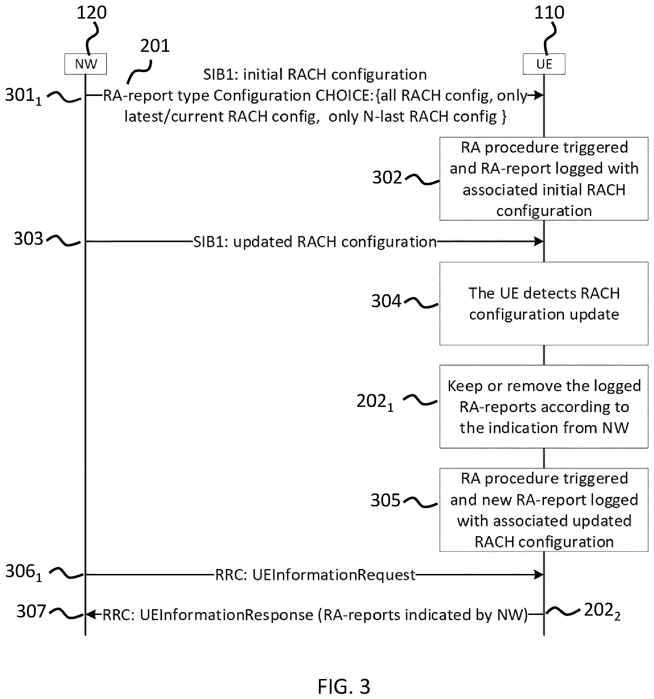

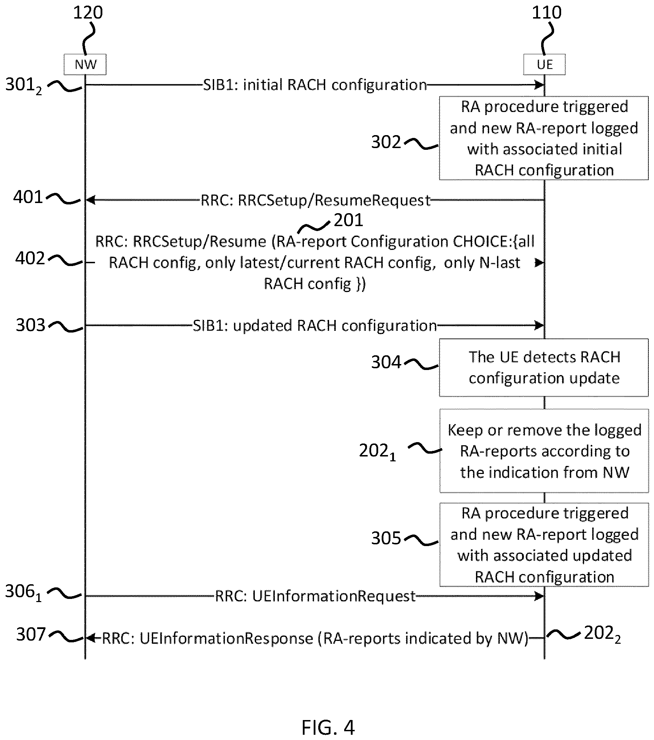

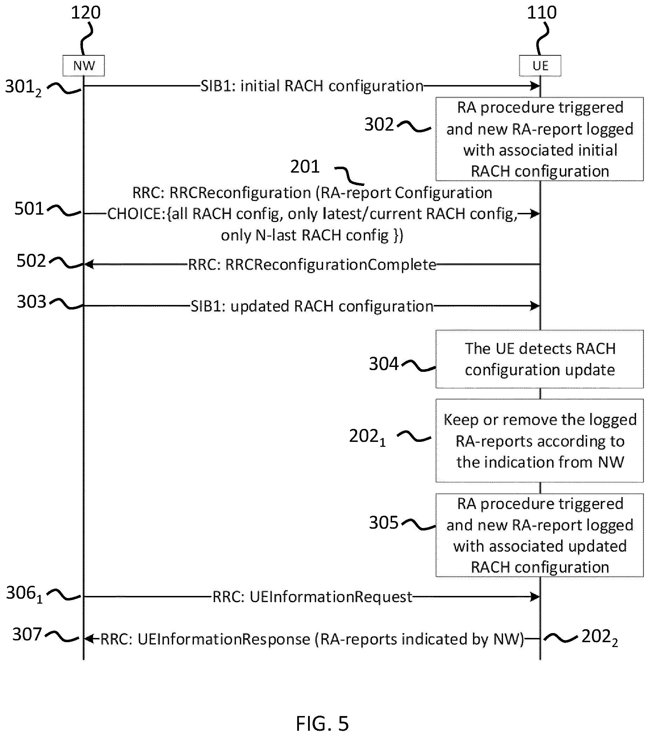

The information/indication of each criterion may be signalled to the UE from the NW. The signals sent and received may be electromagnetic signals encoding (in accordance with an encoding process) the information/indication. The information/indication of each criterion may be signalled to the UE from the NW using, not least for example, any of the following signaling methods:
- broadcasted signaling, e.g. in SIB1 together with RA configuration (as illustrated in Fig. 3);
- dedicated signaling, e.g. dedicated RRC signaling, not least such as:
   - in a RRCSetup/RRCResume message when UE moves from RRC_Idle/Inactive to RRC_Connected state (as illustrated in Fig. 4), or
   - in a RRCReconfiguration message when the UE is in RRC_Connected state (as illustrated in Fig. 5), or
   - in a UElnformationRequest message when the NW requests the UE to report RA reports (as illustrated in Fig. 6).

Both options (broadcasted or dedicated signaling of the indication) can be triggered from a Core Node, CN, 130 or from an Operations and Maintenance O&M entity through management-based or signaling-based MDT configuration.

Upon receiving the information/indication of each criterion, the UE applies a procedure to distinguish/select which RA reports fulfil the indicated criteria/conditions. In this regard, the UE determines the indicated criteria/conditions, and determines which RA reports meet the indicated criteria/conditions.

Upon determination of which RA reports are to be stored in accordance with the indicated criteria, the UE keeps storing such RA reports. The UE also, upon request from the NW, reports/transmits such RA reports. In some examples, the UE only records/stores a RA procedure outcome as a RA report if the RA procedure matches the indication, e.g. if the RA configuration of the RA procedure fulfils the RA configuration-based criterion and any other criteria indicated by the NW.

The UE can ignore/disregard recording/storing a RA procedure outcome (e.g. if it is not corresponding to the indicated RA configuration), or it can remove/delete the rest of RA reports that are not needed by the NW according to the indication before the RA reports are reported/transmitted to the NW.

The step of block 202 may be responsive to/triggered by receipt of a RA configuration from the NW and/or by receipt of the criterion indicated by the information 201. In some examples, the triggering of block 202 depends on which one of: a RA configuration update, or a criterion indication is received later. In some examples, the triggering of block 202 depends on the RA configuration update and the criterion indication being received together (as in FIG. 3) or not being received together (as in FIGs 4 - 6). For example, the UE may receive a first/initial RA configuration. The UE may perform one or more RA procedures using the same and may store one or more RA reports for each of the successful RA procedures. The UE may then receive a second/new RA configuration. The receipt of such a new RA configuration may trigger the UE to perform step 202. For example, responsive to determining that the second RA configuration is different to the first RA configuration (i.e. determining that the second RA configuration is a new/updated RA configuration and hence that the first RA configuration is now an old/previous RA configuration), the UE may trigger the controlling of the storage and/or transmission of its RA reports based, at least in part, on the indicated criterion. For instance, if the indicated criterion were indicative that only RA reports associated with current RA configurations should be stored and transmitted, the UE may, upon receiving a new/current RA configuration delete the RA reports associated with the old/former RA configuration. Responsive to receipt of a request (not shown in FIG. 2) from the NW for RA report(s), the UE may then send the one or more stored RA reports, i.e. RA reports that meet the criterion indicated by the information 201.

FIGs. 3, 4, 5 and 6 illustrate examples of signaling diagrams for use with examples of the present disclose. These FIGs show examples of implementational details of RA report management for controlling the storage and/or transmission of RA reports. In particular, FIGs. 3, 4, 5 and 6 illustrate different implementation examples for different options for the NW to provide/transmit, to the UE, the information (i.e. an indication) indicative of a criterion for determining, at least in part, whether a RA report is to be stored and/or transmitted.

As will be discussed in further detail below, in FIG 3, the information/indication indicative of the criterion/criteria to be applied is provided from NW to the UE using a broadcasted signaling mechanism, namely a SIB1 message. Whereas in FIGs. 4, 5 and 6, the information/indication is provided from NW to the UE using a dedicated signaling mechanism, namely a dedicated RRC message.

In block 301₁, NW 120 transmits a SIB1 message that is received by the UE 110. The SIB1 message comprises an initial RA configuration, for instance as provided by RACH-ConfigCommon IE. The SIB 1 message also comprises the information 201 indicative of a criterion for determining, at least in part, whether a RA report is to be stored and/or transmitted to the NW. The information 201 is conveyed in the form of an indication in the SIB 1 message. The indication may be:
- a one bit indication to inform the UE e.g. whether only RA reports associated with the latest/current RA configuration should be stored and/transmitted to the NW, or whether RA reports associated with any RA configuration should be stored and/or transmitted to the NW. The one bit indication may be interpreted as a "reset" indicator whereby the UE is instructed to erase any existing RA reports containing old entries/associated with old RA configurations. In some examples, the one bit indication may be applied for RA reports related to a cell or a group of cells wherein the indication is received; or it may be applied for all the RA reports related to any cell.
- information regarding different alternatives (e.g., using CHOICE type information element as illustrated in FIGS 3 - 6, or using a bitmap to indicate which RA reports should be stored and/or transmitted to the NW) on which RA configuration related RA reports should be stored and/or transmitted to the NW, for which cell(s) or group(s) of cells the RA reports should be stored and/or transmitted to the NW, which content/part of the RA reports (e.g., 2-steps RA or 4-steps RA related, or SIB-based RA configuration [as per FIG. 3] should be stored and/or transmitted to the NW, etc.

In block 302, a RA procedure is triggered, using the received RA configuration. The UE logs/stores not only the RA report itself (e.g. as specified in standard), but also the corresponding RA configuration that the RA report is associated with. There are multiple implementation options to achieve this. For example:
- the UE may log the corresponding RA configuration received from the SIB1 301 together with the logged RA report.
- the UE may index different RA configurations using its own implementation algorithm (e.g., a simple in-sequence indexing method can be used) and the UE may also mark which RA configuration index is the latest RA configuration received from SIB1.
- in another option, the RA configuration index may be standardized and indicated to the UE in SIB1 together with the RA configuration (e.g., in a similar way as the ValueTag for other SIBs rather than SIB1). When the UE reports the RA reports, the RA configuration index (or some information indicative of the RA configuration) to which the RA report relates can be also reported together with the logged information for the RA procedure. This option would require a change of RA configuration IE in SIB1.

In block 303, the UE receives a second SIB1 message with an updated RA configuration, for instance as provided by an updated RACH-ConfigCommon IE.

In block 304, the UE identifies that a RA configuration update has taken place. The UE can identify the RA configuration update by reading the updated SIB1 information in the second SIB1 if the UE stays in the same cell or when the UE comes back to the cell wherein the RA report has been logged for the cell. Otherwise, the UE may consider the logged RA report is for the latest RA configuration that the UE has received. To distinguish RA reports associated with a RA configuration update, the UE may log two subsequent RA procedures outcomes (one preceding the RA configuration update [i.e. as per block 302], and another one following the RA configuration update [i.e. as per block 305]).

In block 202, the UE controls the storage of RA reports based on the indicated criterion of the information/indication 201 received from the NW in block 301₁. In this regard, the UE keeps or removes logged RA reports according to the information/indication 201 received from the NW.

The UE, upon receiving the indication on whether the RA reports associated with a previous/old RA configuration (i.e., a RA configuration that is no longer active) shall be stored and/or transmitted, can keep or remove the logged RA reports according to the NW indication. For example, if the UE has one logged RA report associated with a RA configuration of a serving/selected cell, and if the UE has identified that the RA configuration of this serving/selected cell has been updated since, then the UE can delete/remove the logged RA report if the NW indicates to transmit/report only RA reports associated with the latest/current RA configuration. The timing of the removal of the logged RA reports by the UE may depends on how the NW configures the indication. For instance, if the indication is provided in SIB1 together with RA configuration [as per FIG. 3] or in RRCSetup message [as per FIG. 4], the logged RA reports which the NW indicates should not be reported can be erased immediately when the indication is received. Whereas, if the indication is provided in a UElnformationRequest message [as per FIG. 6], the logged RA reports which the NW indicates should not be reported can be erased before the requested RA reports are transmitted/reported.

In block 305, if the UE is triggered to perform a further RA procedure with the newly received/updated RA configuration, the further RA procedure is triggered using the newly received/updated RA configuration. The UE may log/store the new RA report and also the corresponding newly received/updated RA configuration that the new RA report is associated with (or it may log/store an RA configuration index associated with the newly received/updated RA configuration).

In block 306₁, the NW transmits a message, i.e. a RRC UElnformationRequest message, comprising a request for UE information, wherein the requested UE information comprises a request for RA reports (e.g. requesting either RA reports related to successful RA procedures and/or failed RA procedures associated with radio link failure or handover failure), wherein the RA reports are in accordance with the information/indication 201 received from the NW.

In block 202₂ the UE controls the transmission of RA reports based, at least in part, on the indicated criterion of the information/indication 201 received from the NW in block 301₁. In this regard, in block 307, the UE responds to the NWs UE information request by transmitting a message, i.e. a RRC UElnformationResponse message, which comprises one or more RA reports in accordance with the information/indication 201 received from the NW.

FIG 4 is somewhat similar to the signalling/scheme of FIG. 3, however, rather than transmitting the information/indication via a SIB1 message, the information/indication 201 is instead transmitted via RRC dedicated signaling.

In block 301₂, NW 120 transmits a SIB1 message, comprising an initial RA configuration, that is received by the UE 110. Unlike the SIB1 message of FIG. 3, the SIB1 message of FIG. 4 does not also comprises information indicative of a criterion for determining, at least in part, whether a RA report is to be stored and/or transmitted.

In block 302, a RA procedure is triggered, using the received RA configuration. The UE logs/stores not only the RA report itself, but also the corresponding RA configuration that the RA report is associated with.

In block 401, the UE transmits a message to request a setup/resume of an RRC connection, namely a RRCSetup/ResumeRequest message.

In block 402, the NW responds to the request by transmitting a message to setup/resume the RRC connection, namely a RRCSetup/Resume message. This message comprises information 201 indicative of a criterion for determining, at least in part, whether a RA report is to be stored and/or transmitted. The information is conveyed in the form of an indication in the RRC message. The indication may be:
- a one bit indication to inform the UE e.g. whether only RA reports associated with the latest/current RA configuration should be stored and/or transmitted to the NW, or whether RA reports associated with any RA configuration should be stored and/or transmitted to the NW.
- information regarding different alternatives (e.g., using CHOICE type information element, or using a bitmap to indicate which RA reports should be stored and/or transmitted to the NW) on which RA configuration related RA reports should be stored and/or transmitted to the NW, for which cell(s) or group(s) of cells the RA reports should be stored and/or transmitted to the NW, which content/part of the RA reports should be stored and/or transmitted to the NW, etc.

In block 303, the UE receives a second SIB1 with an updated RA configuration.

In block 304, the UE identifies that a RA configuration update has taken place.

In block 202, the UE controls the storage of RA reports based on the indicated criterion of the information/indication 201 received from the NW in block 402. In this regard, the UE keeps or removes logged RA reports according to the information/indication 201 received from the NW.

In block 305, if the UE is triggered to perform a further RA procedure with the newly received/updated RA configuration, the further RA procedure is triggered using the newly received/updated RA configuration. The UE may log/store the new RA report and also the corresponding newly received/updated RA configuration that the new RA report is associated with (or it may log/store an RA configuration index associated with the newly received/updated RA configuration).

In block 306₁, the NW transmits a RRC UElnformationRequest, wherein the requested UE information comprises a request for RA reports (e.g. requesting either RA reports related to successful RA procedures and/or failed RA procedures associated with radio link failure or handover failure), wherein the RA reports are in accordance with the information/indication 201 received from the NW.

In block 202₂ the UE controls the transmission of RA reports based, at least in part, on the indicated criterion of the information/indication 201 received from the NW in block 402. In this regard, in block 307, the UE responds to the NWs UE information request by transmitting a RRC UElnformationResponse message which comprises RA reports in accordance with the information/indication 201 received from the NW.

FIG. 5 is similar to the signalling/scheme of FIG. 4, however instead of conveying the information 201 indicative of a criterion for determining, at least in part, whether a RA report is to be stored and/or transmitted to the NW in a RRCSetup/Resume message [as per block 402 of FIG. 4]:
In block 501, after an RRC connection is established or resumed, the NW transmits a message to request a reconfiguration of the RRC connection, namely a RRCReconfiguration message which comprises the information 201 indicative of a criterion for determining, at least in part, whether a RA report is to be stored and/or transmitted to the NW. The information is conveyed in the form of an indication in the RRC message. The form of the indication may similar to that of FIGs. 3 and 4, e.g. either a one bit indication or information of different alternative criteria.

In block 502, the UE applies the RRC reconfiguration and transmits a RRCReconfiguration Complete message.

FIG. 6 is similar to the signalling/scheme of FIGs. 4 and 5, however instead of conveying the information 201 indicative of a criterion for determining, at least in part, whether a RA report is to be stored and/or transmitted to the NW in:
- a RRCSetup/Resume message [as per block 402 of FIG. 4], or
- a RRCReconfiguration message [as per block 501 of FIG. 5],
the information 201 is transmitted the NW's transmission of a RRC UElnformationRequest. In this regard, in block 306₂, the NW transmits a RRC UElnformationRequest wherein the requested UE information comprises a request for RA reports either for RA report related to successful RA procedure or failed RA procedure associated with radio link failure or handover failure, and wherein the request also comprises the information 201.

Advantageously, examples of the disclosure, not least such as the implementations of FIGs. 3 to 6, provide a mechanism which enables to achieve efficient and selective storage and/or transmission of RA reports, under full NW control, that may be needed by the NW per optimization use cases. Examples of the disclosure may also facilitate RA report association with corresponding RA configuration.

It will be understood that each block and combinations of blocks illustrated in FIGs. 2 - 6, as well as the functions described above, can be implemented by various means, such as hardware, firmware, and/or software including one or more computer program instructions. For example, one or more of the functions described below can be performed by a duly configured apparatus (such as an apparatus, or UE, comprising means for performing the described functions). One or more of the functions described below can be embodied by a duly configured computer program (such as a computer program comprising computer program instructions which embody the functions described below and which can be stored by a memory storage device and performed by a processor).

As will be appreciated, any such computer program instructions can be loaded onto a computer or other programmable apparatus (i.e. hardware) to produce a machine, such that the instructions when performed on the programmable apparatus create means for implementing the functions specified in the blocks. These computer program instructions can also be stored in a computer-readable medium that can direct a programmable apparatus to function in a particular manner, such that the instructions stored in the computer-readable memory produce an article of manufacture including instruction means which implement the function specified in the blocks. The computer program instructions can also be loaded onto a programmable apparatus to cause a series of operational actions to be performed on the programmable apparatus to produce a computer-implemented process such that the instructions which are performed on the programmable apparatus provide actions for implementing the functions specified in the blocks.

Various, but not necessarily all, examples of the present disclosure can take the form of an apparatus, a method, or a computer program. Accordingly, various, but not necessarily all, examples can be implemented in hardware, software or a combination of hardware and software.

Various, but not necessarily all, examples of the present disclosure are described using flowchart illustrations and schematic block diagrams. It will be understood that each block (of the flowchart illustrations and block diagrams), and combinations of blocks, can be implemented by computer program instructions of a computer program. These program instructions can be provided to one or more processor(s), processing circuitry or controller(s) such that the instructions which execute on the same create means for causing implementing the functions specified in the block or blocks, i.e. such that the method can be computer implemented. The computer program instructions can be executed by the processor(s) to cause a series of operational block/steps/actions to be performed by the processor(s) to produce a computer implemented process such that the instructions which execute on the processor(s) provide block/steps for implementing the functions specified in the block or blocks.

Accordingly, the blocks support: combinations of means for performing the specified functions; combinations of actions for performing the specified functions; and computer program instructions/algorithm for performing the specified functions. It will also be understood that each block, and combinations of blocks, can be implemented by special purpose hardware-based systems which perform the specified functions or actions, or combinations of special purpose hardware and computer program instructions.

Various, but not necessarily all, examples of the present disclosure provide both a method and corresponding apparatus comprising various modules, means or circuitry that provide the functionality for performing/applying the actions of the method. The modules, means or circuitry can be implemented as hardware, or can be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

Fig. 7 schematically illustrates a block diagram of an apparatus 10 for performing the methods, processes, procedures and signalling described in the present disclosure and illustrated in Figs. 2 - 6, in this regard the apparatus can perform the roles of the UE 110, of the NW 120 (e.g. a RAN node) in the illustrated and described methods. The component blocks of Fig. 7 are functional and the functions described can be performed by a single physical entity.

The apparatus comprises a controller 11, which could be provided within a device such as the UE 110 or NW 120.

The controller 11 can be embodied by a computing device, not least such as those mentioned above. In some, but not necessarily all examples, the apparatus can be embodied as a chip, chip set, circuitry or module, i.e. for use in any of the foregoing. As used here 'module' refers to a unit or apparatus that excludes certain parts/components that would be added by an end manufacturer or a user.

Implementation of the controller 11 can be as controller circuitry. The controller 11 can be implemented in hardware alone, have certain aspects in software including firmware alone or can be a combination of hardware and software (including firmware).

The controller 11 can be implemented using instructions that enable hardware functionality, for example, by using executable instructions of a computer program 14 in a general-purpose or special-purpose processor 12 that can be stored on a computer readable storage medium 13, for example memory, or disk etc, to be executed by such a processor 12.

The processor 12 is configured to read from and write to the memory 13. The processor 12 can also comprise an output interface via which data and/or commands are output by the processor 12 and an input interface via which data and/or commands are input to the processor 12. The apparatus can be coupled to or comprise one or more other components 15 (not least for example: a radio transceiver, sensors, input/output user interface elements and/or other modules/devices/components for inputting and outputting data/commands).

The memory 13 stores a computer program 14 comprising instructions (computer program instructions/code) that controls the operation of the apparatus 10 when loaded into the processor 12. The instructions of the computer program 14, provide the logic and routines that enables the apparatus to perform the methods, processes and procedures described in the present disclosure and illustrated in Figs. 2 to 6. The processor 12 by reading the memory 13 is able to load and execute the computer program 14.

The computer program instructions may be comprised in a computer program, a non-transitory computer readable medium, a computer program product, a machine-readable medium. The term "non-transitory," as used herein, is a limitation of the medium itself (i.e. tangible, not a signal) as opposed to a limitation on data storage persistency (e.g. RAM vs. ROM). In some but not necessarily all examples, the computer program instructions may be distributed over more than one computer program.

Although the memory 13 is illustrated as a single component/circuitry it can be implemented as one or more separate components/circuitry some or all of which can be integrated/removable and/or can provide permanent/semi-permanent/ dynamic/cached storage.

Although the processor 12 is illustrated as a single component/circuitry it can be implemented as one or more separate components/circuitry some or all of which can be integrated/removable. The processor 12 can be a single core or multi-core processor.

The apparatus can include one or more components for effecting the methods, processes and procedures described in the present disclosure and illustrated in Figs. 2 to 6. It is contemplated that the functions of these components can be combined in one or more components or performed by other components of equivalent functionality. The description of a function should additionally be considered to also disclose any means suitable for performing that function. Where a structural feature has been described, it can be replaced by means for performing one or more of the functions of the structural feature whether that function or those functions are explicitly or implicitly described.

Although examples of the apparatus have been described above in terms of comprising various components, it should be understood that the components can be embodied as or otherwise controlled by a corresponding controller or circuitry such as one or more processing elements or processors of the apparatus. In this regard, each of the components described above can be one or more of any device, means or circuitry embodied in hardware, software or a combination of hardware and software that is configured to perform the corresponding functions of the respective components as described above.

The apparatus can, for example, be a client device, a server device, a mobile cellular telephone, a base station in a mobile cellular telecommunication system, a wireless communications device, a hand-portable electronic device, a location/position tag, a hyper tag etc. The apparatus can be embodied by a computing device, not least such as those mentioned above. However, in some examples, the apparatus can be embodied as a chip, chip set, circuitry or module, i.e. for use in any of the foregoing.

In one example, the apparatus is embodied on a hand held portable electronic device, such as a mobile telephone, mobile communication device, wearable computing device or personal digital assistant, that can additionally provide one or more audio/text/video communication functions (for example tele-communication, video-communication, and/or text transmission (Short Message Service (SMS)/ Multimedia Message Service (MMS)/emailing) functions), interactive/non-interactive viewing functions (for example web-browsing, navigation, TV/program viewing functions), music recording/playing functions (for example Moving Picture Experts Group-1 Audio Layer 3 (MP3) or other format and/or (frequency modulation/amplitude modulation) radio broadcast recording/playing), downloading/sending of data functions, image capture function (for example using a (for example in-built) digital camera), and gaming functions, or any combination thereof.

In examples where the apparatus is provided within a UE 110, the apparatus comprises: at least one processor 12; and
at least one memory 13 storing instructions that, when executed by the at least one processor 12, cause the apparatus at least to:
receive information indicative of a criterion for determining, at least in part, whether a Random Access, RA, report is to be stored and/or transmitted;
control a storage and/or a transmission of the RA report based, at least in part, on the indicated criterion;
wherein the criterion is based, at least in part, on a RA configuration associated with the RA report, and
wherein the RA configuration comprises RA configuration information for a RA procedure that has been performed and whose information has been logged in the RA report.

In examples where the apparatus is provided within a NW element e.g. RAN node 120, the apparatus comprises:
at least one processor 12; and
at least one memory 13 storing instruction that, when executed by the at least one processor 12, cause the apparatus at least to:
   transmit, to a User Equipment, UE, information indicative of a criterion for the UE to determine, at least in part, whether a Random Access, RA, report is to be stored and/or transmitted by the UE to the apparatus;
   wherein the criterion is based, at least in part, on a RA configuration associated with the RA report; and
   wherein the RA configuration comprises RA configuration information for a RA procedure that has been performed and whose information has been logged by the UE in the RA report.

According to some examples of the present disclosure, there is provided a system (for example at least one UE 110 and the NW 120).

The above described examples may find application as enabling components of: telecommunication systems, tracking systems, automotive systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things (IOT); Vehicle-to-everything (V2X), virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

Fig. 8, illustrates a computer program 14 which may be conveyed via a delivery mechanism 20. The delivery mechanism 20 can be any suitable delivery mechanism, for example, a machine-readable medium, a computer-readable medium, a non-transitory computer-readable storage medium, a computer program product, a memory device, a solid-state memory, or an article of manufacture that comprises or tangibly embodies the computer program 14. The delivery mechanism can be a signal configured to reliably transfer the computer program. An apparatus can receive, propagate or transmit the computer program as a computer data signal.

In certain examples of the present disclosure, there is provided a computer program comprising instructions, which when executed by an apparatus (UE 110), cause the apparatus to perform at least the following or for causing performing at least the following:
receiving information indicative of a criterion for determining, at least in part, whether a Random Access, RA, report is to be stored and/or transmitted;
controlling a storage and/or a transmission of the RA report based, at least in part, on the indicated criterion;
wherein the criterion is based, at least in part, on a RA configuration associated with the RA report, and
wherein the RA configuration comprises RA configuration information for a RA procedure that has been performed and whose information has been logged in the RA report.

In certain examples of the present disclosure, there is provided computer program comprising instructions, which when executed by an apparatus (NW 120), cause the apparatus to perform at least the following or for causing performing at least the following:
transmitting, to a User Equipment, UE, information indicative of a criterion for the UE to determine, at least in part, whether a Random Access, RA, report is to be stored and/or transmitted by the UE to the apparatus;
wherein the criterion is based, at least in part, on a RA configuration associated with the RA report; and
wherein the RA configuration comprises RA configuration information for a RA procedure that has been performed and whose information has been logged by the UE in the RA report.

References to 'computer program', 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' can refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and/or processor(s), such as a microprocessor(s) or a portion of a microprocessor(s), that requires software (for example firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

Although specific terms are employed herein, they are used in a generic and descriptive sense only and not for purposes of limitation.

Features described in the preceding description can be used in combinations other than the combinations explicitly described.

Although functions have been described with reference to certain features, those functions can be performable by other features whether described or not.

Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent.

Although various examples of the present disclosure have been described in the preceding paragraphs, it should be appreciated that modifications to the examples given can be made without departing from the scope of the invention as set out in the claims.

The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".

In this description, the wording 'connect', 'couple' and 'communication' and their derivatives mean operationally connected/coupled/in communication. It should be appreciated that any number or combination of intervening components can exist (including no intervening components), i.e. so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), retrieving/accessing (for example, retrieving/accessing data in a memory), obtaining and the like. Also, " determine/determining" can include resolving, selecting, choosing, establishing, and the like.

References to a parameter (for example a criterion) should be understood to refer to "data indicative of", "data defining" or "data representative of" the relevant parameter/parameter value if not explicitly stated (unless the context demands otherwise). The data may be in any way indicative of the relevant parameter/parameter value, and may be directly or indirectly indicative thereof.

In this description, reference has been made to various examples. The description of features or functions in relation to an example indicates that those features or functions are present in that example. The use of the term 'example' or 'for example', 'can' or 'may' in the text denotes, whether explicitly stated or not, that such features or functions are present in at least the described example, whether described as an example or not, and that they can be, but are not necessarily, present in some or all other examples. Thus 'example', 'for example', 'can' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are used with an inclusive not an exclusive meaning and are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or `the' with an exclusive meaning then it will be made clear in the context. In some circumstances the use of 'at least one' or 'one or more' can be used to emphasise an inclusive meaning but the absence of these terms should not be taken to infer any exclusive meaning. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The presence of a feature (or combination of features) in a claim is a reference to that feature (or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described. In the above description, the apparatus described can alternatively or in addition comprise an apparatus which in some other examples comprises a distributed system of apparatus, for example, a client/server apparatus system. In examples where an apparatus provided forms (or a method is implemented as) a distributed system, each apparatus forming a component and/or part of the system provides (or implements) one or more features which collectively implement an example of the present disclosure. In some examples, an apparatus is re-configured by an entity other than its initial manufacturer to implement an example of the present disclosure by being provided with additional software, for example by a user downloading such software, which when executed causes the apparatus to implement an example of the present disclosure (such implementation being either entirely by the apparatus or as part of a system of apparatus as mentioned hereinabove).

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.

The examples of the present disclosure and the accompanying claims can be suitably combined in any manner apparent to one of ordinary skill in the art. Separate references to an "example", "in some examples" and/or the like in the description do not necessarily refer to the same example and are also not mutually exclusive unless so stated and/or except as will be readily apparent to those skilled in the art from the description. For instance, a feature, structure, process, block, step, action, or the like described in one example may also be included in other examples, but is not necessarily included.

Each and every claim is incorporated as further disclosure into the specification and the claims are embodiment(s) of the present disclosure. Further, while the claims herein are provided as comprising specific dependencies, it is contemplated that any claims can depend from any other claims and that to the extent that any alternative embodiments can result from combining, integrating, and/or omitting features of the various claims and/or changing dependencies of claims, any such alternative embodiments and their equivalents are also within the scope of the disclosure.

## Claims

1. An apparatus comprising:
means for receiving information indicative of a criterion for determining, at least in part, whether a Random Access, RA, report is to be stored and/or transmitted; and
means for controlling a storage and/or a transmission of the RA report based, at least in part, on the indicated criterion,
wherein the criterion is based, at least in part, on a RA configuration associated with the RA report,
and wherein the RA configuration comprises RA configuration information for a RA procedure that has been performed and whose information has been logged in the RA report.

2. The apparatus of claim 1, wherein controlling the storage and/or the transmission of the RA report based, at least in part, on the indicated at least one criterion comprises:
determining whether the indicated criterion is met for the RA report; and
controlling the storage and/or the transmission of the RA report based, at least in part, on the determination.

3. The apparatus of any previous claim, wherein the indicated criterion comprises one of the following:
whether the RA configuration associated with the RA report corresponds to a currently active RA configuration;
whether the RA configuration associated with the RA report corresponds to a former RA configuration;
whether the RA configuration associated with the RA report corresponds to any of the N-last RA configurations; or
whether the RA configuration associated with the RA report corresponds to any RA configuration.

4. The apparatus of any previous claim, wherein controlling the storage of the RA report based, at least in part, on the indicated criterion comprises one of the following:
maintaining a storage of the RA report based, at least in part, on the indicated criterion;
deleting or discarding the RA report based, at least in part, on the indicated criterion; or
preventing storage of the RA report based, at least in part, on the indicated criterion.

5. The apparatus of any previous claim, further comprising:
means for receiving a request for one or more RA reports; and
means for transmitting the RA report based, at least in part, on the indicated criterion and on the received request.

6. The apparatus of any previous claim, further comprising:
means for receiving second information indicative of a second criterion for determining, at least in part, whether the RA report is to be stored and/or transmitted,
wherein the second criterion is based, at least in part, on cell information associated with the RA report,
wherein the cell information comprises an indication of a cell identity or a cell group identity in which the RA procedure has been performed, and
wherein the controlling means is further configured to control the storage and/or the transmission of the RA report further based, at least in part, on the indicated second criterion.

7. The apparatus of any previous claim, further comprising:
means for receiving third information indicative of a third criterion for determining, at least in part, whether the RA report is to be stored and/or transmitted,
wherein the third criterion is based, at least in part, on a content of the RA report,
and wherein the controlling means is further configured to control the storage and/or the transmission of the RA report further based, at least in part, on the indicated third criterion.

8. The apparatus of any previous claim, further comprising:
means for receiving a RA configuration;
means for performing a RA procedure using the received RA configuration;
means for generating a RA report of the RA procedure;
means for storing the generated RA report; and
means for storing one or more parts of the received RA configuration used for the RA procedure of the generated RA report, and/or an indication of one or more parts of the received RA configuration used for the RA procedure of the generated RA report.

9. The apparatus of any previous claim, wherein the information indicative of the criterion is received via at least one of:
broadcasted signaling;
System Information Block, SIB, signaling;
dedicated signaling;
dedicated Radio Resource Control, RRC, signaling;
a RRCSetupRequest message;
a RRCResumeRequest message;
a RRCReconfiguration message; and
a UElnformationRequest message.

10. A User Equipment, UE, comprising the apparatus of any previous claim.

11. A method comprising:
receiving information indicative of a criterion for determining, at least in part, whether a Random Access, RA, report is to be stored and/or transmitted; and
controlling a storage and/or a transmission of the RA report based, at least in part, on the indicated criterion,
wherein the criterion is based, at least in part, on a RA configuration associated with the RA report,
and wherein the RA configuration comprises RA configuration information for a RA procedure that has been performed and whose information has been logged in the RA report.

12. Computer program comprising instructions, which when executed by an apparatus, cause the apparatus to perform:
receiving information indicative of a criterion for determining, at least in part, whether a Random Access, RA, report is to be stored and/or transmitted; and
controlling a storage and/or a transmission of the RA report based, at least in part, on the indicated criterion,
wherein the criterion is based, at least in part, on a RA configuration associated with the RA report,
and wherein the RA configuration comprises RA configuration information for a RA procedure that has been performed and whose information has been logged in the RA report.

13. An apparatus comprising:
means for transmitting, to a User Equipment, UE, information indicative of a criterion for the UE to determine, at least in part, whether a Random Access, RA, report is to be stored and/or transmitted by the UE to the apparatus,
wherein the criterion is based, at least in part, on a RA configuration associated with the RA report,
and wherein the RA configuration comprises RA configuration information for a RA procedure that has been performed and whose information has been logged by the UE in the RA report.

14. A method comprising:
transmitting, to a User Equipment, UE, information indicative of a criterion for the UE to determine, at least in part, whether a Random Access, RA, report is to be stored and/or transmitted by the UE to the apparatus,
wherein the criterion is based, at least in part, on a RA configuration associated with the RA report,
and wherein the RA configuration comprises RA configuration information for a RA procedure that has been performed and whose information has been logged by the UE in the RA report.

15. Computer program comprising instructions, which when executed by an apparatus, cause the apparatus to perform:
transmitting, to a User Equipment, UE, information indicative of a criterion for the UE to determine, at least in part, whether a Random Access, RA, report is to be stored and/or transmitted by the UE to the apparatus,
wherein the criterion is based, at least in part, on a RA configuration associated with the RA report,
and wherein the RA configuration comprises RA configuration information for a RA procedure that has been performed and whose information has been logged by the UE in the RA report.
